# EUROPEAN PATENT APPLICATION

(11) **EP 4 371 407 A1**
(43) Date of publication of application: **22.05.2024**
(21) Application number: 23207706.5
(22) Date of filing: 03.11.2023
(51) Int. Cl.: A01K 63/04, A01K 63/06

(54) **HEATER FOR AQUARIUMS**

(30) Priority: 16.11.2022 IT 202200023559
(71) Applicant: Ferplast S.p.A., 36070 Castelgomberto (VI) (IT)
(72) Inventor: VACCARI, Nicola, 36070 CASTELGOMBERTO (VICENZA) (IT)
(74) Representative: Sandri, Sandro

(57) **Abstract**

A heater (10) for aquariums comprising a heating element (11) adapted to generate an amount of heat for heating an amount of water of an aquarium and a support body (12) adapted to support the heating element (11). In particular, the support body (12) has a support surface (13), adapted to support said heating element (11), and a heat exchange surface (14), adapted to come into contact with the water to be heated in a dynamic manner to transmit at least a portion of the amount of heat generated by the heating element (11) thereto. Furthermore, said support body (12) is at least partially made of alumina.

## Description

### TECHNICAL FIELD

The present invention relates to a heater for aquariums.

That is, the present invention relates to the technical field of the devices adapted to confer heat to the water present inside an aquarium so as to ensure adequate temperature conditions for the animals and/or the vegetation contained therein.

### PRIOR ART

Nowadays, the water contained inside aquariums is heated by means of heaters comprising a heating wire, generally wound around a support element, arranged inside a containment structure, made of glass or plastic or a glass-plastic mixture, configured to transmit the heat generated by the heating wire to the water of the aquarium.

In particular, the fragile nature of glass and its poor resistance to thermal shocks has led to the introduction of plastics.

Disadvantageously, glass and plastic have a low thermal conductivity which has brought the need for particularly bulky products as a function of the resistance level to the thermal shock defined by the heater manufacturer (for example cylindrical bodies with a length up to 40 centimeters and with diameters up to 3.5 centimeters, precisely to avoid the onset of overheating inside the containment structure).

Such dimensions make it impractical to integrate the heaters with other devices already present in the aquarium, for example pumps, filters, and the like.

In essence, the bulky dimensions have brought the need to make the heaters in the form of items independent of the other devices in the aquarium, as illustrated in ITVE20130007A1.

Disadvantageously, moreover, the heaters thus developed generate the formation of air bubbles on the surface of the containment structure which reduces the heat exchange thereof and can lead to a further overheating thereof, and thus to the risk of breakage.

Heaters developed with the same principle also exist, but which are intended for use outside the aquarium, through pipes connecting to the tank, where the water is forced to pass. These heaters have the aforementioned drawbacks, including the disadvantage of significant dimensions. In this case, however, there is an aggravating factor: they cannot be installed horizontally, as air bubbles would form inside the heating element, such as to create overheating which can damage the product itself.

### DESCRIPTION OF THE INVENTION

In this context, the technical task underpinning the present invention is to provide a heater for aquariums which obviates the drawbacks in the prior art as described above.

In particular, it is an object of the present invention to provide a heater for aquariums which ensures an increase in the efficiency of the heat exchange with the water to be heated.

A further object of the present invention is to provide a heater for aquariums having high operational flexibility.

A further object of the present invention is to provide a heater for aquariums which has a reduced overall size with the same power generated with respect to the prior-art devices.

A further object of the present invention is to provide a heater for aquariums which has a prolonged average working life with respect to the prior-art devices.

The stated technical task and specified objects are substantially achieved by a heater for aquariums which comprises the technical features disclosed in the independent claim.

The appended claims outline possible advantageous embodiments of the invention.

### ILLUSTRATION OF THE DRAWINGS

Further features and advantages of the present invention will become more apparent from the approximate and thus non-limiting description of a preferred, but not exclusive, embodiment of a heater for aquariums, as illustrated in the accompanying drawings in which:

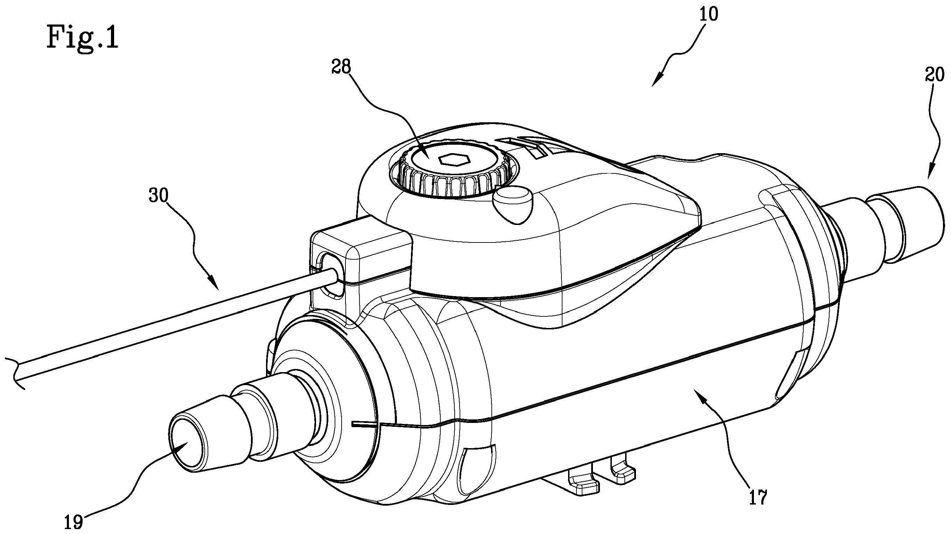

- figure 1 is a perspective view of a heater for aquariums in accordance with a possible embodiment of the present invention;

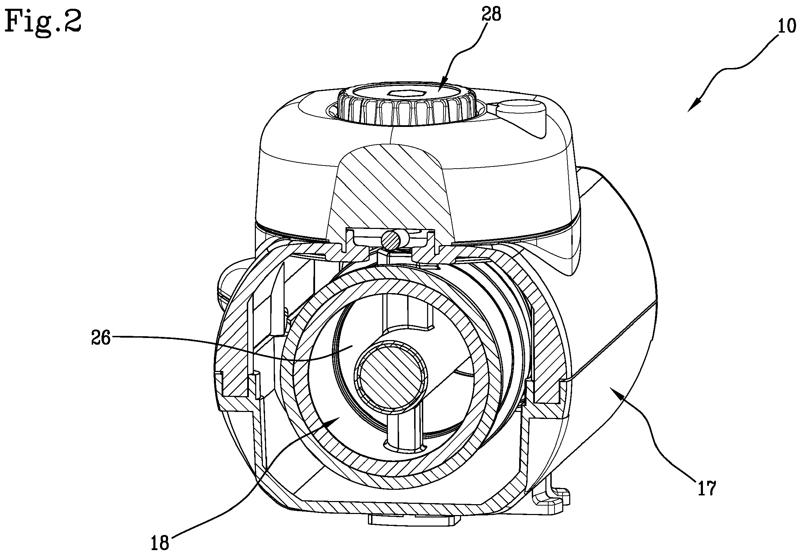

- figures 2-3 are sectional views of the heater for aquariums of figure 1;
- figure 4 is an exploded view of a heater for aquariums in accordance with a further possible embodiment of the present invention.

### DESCRIPTION OF AN EMBODIMENT OF THE INVENTION

In accordance with the accompanying drawings, the reference number 10 has been used to generally designate a heater for aquariums, which will be referred to hereinafter as heater 10.

Preferably, the heater 10 is configured to be arranged, in use, outside the aquarium.

That is, the heater 10 can be an outer heater.

According to further possible embodiments, the heater 10 can be configured to be arranged, in use, inside the aquarium, thereby defining an inner heater without altering the inventive concept underlying the present invention.

The heater 10 comprises a heating element 11 adapted to generate an amount of heat for heating an amount of water of an aquarium.

Furthermore, the heater 10 comprises a support body 12 adapted to support the heating element 11.

In particular, the support body 12 has a support surface 13, adapted to support the heating element 11, and a heat exchange surface 14, adapted to come into contact with the water to be heated to transmit at least a portion of the amount of heat generated by the heating element 11 thereto.

Preferably, the support body 12 can comprise at least one wall at least partially defining the support surface 13 and at least partially the heat exchange surface 14.

In particular, the support surface 13 can be opposite to the heat exchange surface 14 with respect to the aforementioned wall so as to optimize the heat exchange between the heating element 11 and the water to be heated.

According to a feature of the invention, the support body 12 is at least partially made of alumina.

Preferably, the support body 12 is entirely made of alumina.

In particular, alumina or aluminum oxide (Al₂O₃) has a higher thermal conductivity than plastic and glass and, therefore, contributes to a more efficient transmission of the heat between the heating element 11 and the water to be heated.

That is, the increased thermal conductivity allows the size of the heating element to be reduced, increasing the power delivered per square centimeter.

This is also facilitated by the greater resistance of alumina to sudden changes in temperature.

That is, the present invention provides a heater 10 having reduced overall dimensions with respect to the prior-art devices.

Thereby, the heater 10 can be easily integrated in a device for aquariums comprising, for example, a filter for aquariums and/or a pump and/or a skimmer.

Preferably, the support body 12 creates an electrical insulation between the heating element 11 and the water which, in use, laps the heat exchange surface 14 of the support body 12.

That is, the support body 12 is configured to electrically insulate the heating element 11 and the water to be heated.

Advantageously, alumina has excellent dielectric properties, ensuring particularly effective electrical insulation.

In accordance with a possible embodiment of the present invention and as shown in the accompanying drawings, the heating element 11 is printed or screen-printed on a surface of the support body 12.

In accordance with further possible embodiments of the present invention, the heater 10 can comprise fixing means configured to fix the heating element 11 to the support body 12.

For example, the fixing means can comprise a double-sided adhesive, for example an acrylic double-sided adhesive.

Preferably, the heater 10 comprises at least one heating film 16; this film 16 can be at least partially made of a material having a positive temperature coefficient (PTC).

In particular, the at least one film 16 can at least partially define the heating element 11.

According to some possible embodiments of the present invention, the heating element 11 can comprise a metal wire.

For example, the metal wire can be at least partially made of nickel and/or chromium and/or a nickel-chromium alloy.

Preferably, the heater 10 comprises a containment body 17 defining a passage channel 18 for a water flow.

The water flow can involve the outer surface of the support body 12 (and in such a case the heating element 11 is fixed to the inner surface), or the water flow can involve the inner surface of the support body 12 (and the heating element 11 is fixed to the outer surface).

In particular, the containment body 17 can be configured to at least partially contain the support body 12 so that the water flow comes into contact with the aforementioned heat exchange surface 14.

Advantageously, the containment body 17 can comprise an inlet opening 19 and an outlet opening 20, respectively connectable to a water delivery duct and to a water outflow duct. Furthermore, the inlet opening 19 and the outlet opening 20 can be in fluid communication with the passage channel 18.

Thereby, the containment body 17 can ensure a constant inflow of water adapted to lap the heat exchange surface 14.

Furthermore, the inlet opening 19 and the outlet opening 20 allow an easy connection and/or an easy integration with one of the aforementioned devices for aquariums.

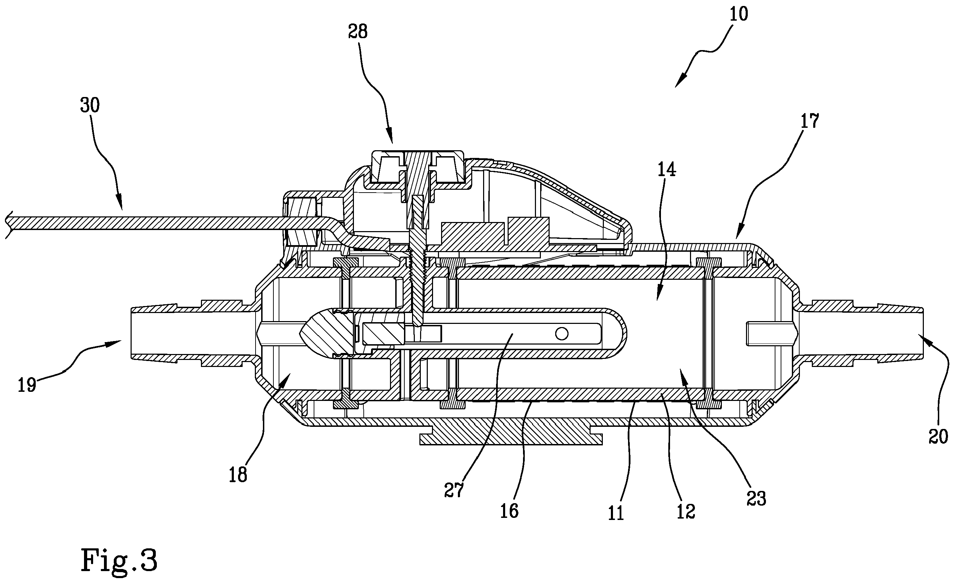

In accordance with a possible embodiment and as illustrated in figures 3-4, the support body 12 has a substantially tubular shape.

Furthermore, the support body 12 can define a housing, preferably a watertight housing, adapted to contain the heating element 11.

In accordance with a possible embodiment of the present invention not illustrated in the accompanying drawings, the support surface 13 can at least partially define an inner surface of the housing. Furthermore, the heat exchange surface 14 can at least partially define an outer surface of the support body 12.

According to a further possible embodiment and as shown in the accompanying drawings, the support body 12 can define a passage conduit 23 adapted to allow the flow of a water flow. In particular, the support surface 13 can at least partially define an outer surface of the support body 12 and the heat exchange surface 14 can at least partially define an inner surface of the support body 12. In accordance with such an embodiment, the heating element, preferably the aforementioned metal wire, can be at least partially wound on the support surface 13.

Advantageously, the heater 10 can comprise an impeller 26 configured to create a vortex motion so as to increase the heat exchange between the support body 12 and the water to be heated.

Thereby, the impeller 26 limits, preferably prevents, the formation of air bubbles on the heat exchange surface 14 of the containment body 12, thus increasing the heat exchange effectiveness and the efficiency of the heater 10.

Therefore, the impeller 26 contributes to increasing the operational flexibility of the heater 10 by allowing, in particular in the event of configurations for use outside the aquarium, a horizontal positioning thereof.

The heater 10 can further comprise a thermostat 27 operatively connected to the heating element 12 for regulating the temperature of the aquarium water.

As shown in figure 3, the thermostat 27 can be a bimetallic thermostat connected to an electronic board.

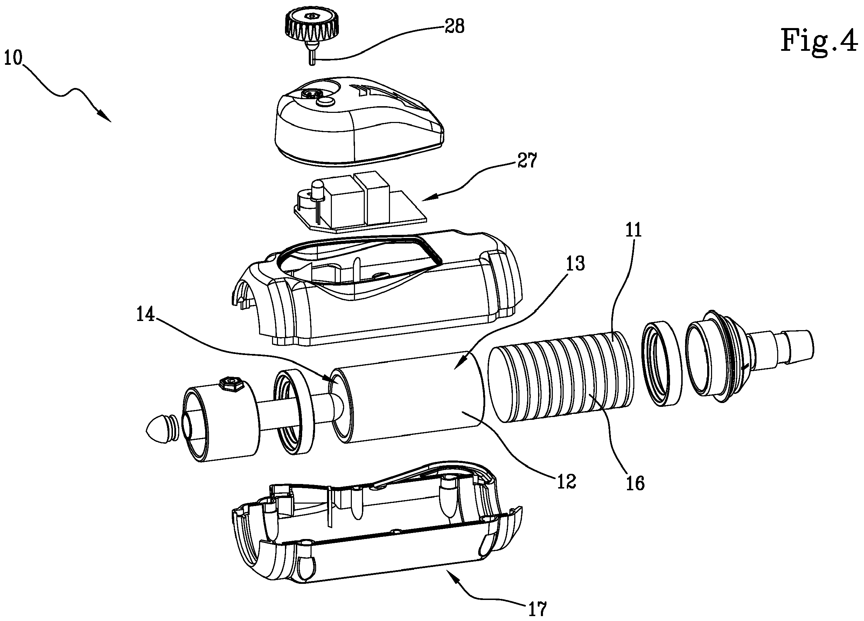

According to further possible embodiments and as illustrated in figure 4, the thermostat 27 can be an electronic thermostat which ensures a more effective regulation and can preferably comprise a wireless connection module thanks to which it can allow a user to regulate and/or read the water temperature, for example, through a smartphone.

In particular, the thermostat 27 can comprise, for example, a regulation pin 28 operable to regulate the temperature to be imparted or maintained in the water of the aquarium.

As illustrated in the figures, the present invention can comprise electrical connection means 30 adapted to allow a connection of the heater 10 to an electrical energy source.

In accordance with a further aspect, the present invention relates to a device for aquariums comprising a heater 10 in accordance with what has been described above and a filter for aquariums and/or a pump and/or a skimmer and/or the like.

Thereby, the present invention provides a single device, for example a thermo-filter and/or a thermo-pump and/or a thermo-skimmer and/or the like, having particularly small dimensions and capable of overcoming the need for the coexistence of a plurality of devices, for example a pump and a heater, which are separate from each other.

It is therefore noted that the present invention achieves the proposed objects by making a heater capable of increasing the efficiency of the heat exchange with the water to be heated thanks to the presence of a support body made at least partially of alumina.

Advantageously, the support body made at least partially of alumina ensures an increase in the average operating life of the heater thanks to the strong resistance of alumina to thermal shocks.

## Claims

1. A heater (10) for aquariums comprising:
- a heating element (11) adapted to generate an amount of heat for heating an amount of water of an aquarium;
- a support body (12) adapted to support said heating element (11), said support body (12) having a support surface (13), adapted to support said heating element (11), and a heat exchange surface (14), adapted to come into contact with the water to be heated to transmit at least a portion of the amount of heat generated by the heating element (11) thereto;
wherein said support body (12) is at least partially made of alumina; **characterized in that** said support body (12) has a substantially tubular shape.

2. The heater according to claim 1, wherein said heating element (11) is printed or screen-printed on a surface of said support body (12).

3. The heater according to claim 1 or 2, comprising at least one heating film (16).

4. The heater according to claim 3, wherein said at least one film (16) is at least partially made of a material having a positive temperature coefficient (PTC), said at least one film (16) at least partially defining said heating element (11).

5. The heater according to one or more of the preceding claims, wherein said support body (12) defines a housing, preferably a watertight housing, adapted to contain said heating element (11); wherein said support surface (13) at least partially defines an inner surface of said housing; and wherein said heat exchange surface (14) at least partially defines an outer surface of said support body (12).

6. The heater according to one or more of the preceding claims, wherein said support body (12) defines a passage conduit (23) adapted to allow the passage of a water flow; wherein said support surface (13) at least partially defines an outer surface of said support body (12); and wherein said heat exchange surface (14) at least partially defines an inner surface of said support body (12).

7. The heater according to one or more of the preceding claims, comprising a containment body (17) defining a passage channel (18) for a water flow; and wherein said containment body (17) is configured to at least partially contain said support body (12) so that the water flow comes into contact with said heat exchange surface (14).

8. The heater according to one or more of the preceding claims, comprising an impeller (26) configured to create a vortex motion so as to increase the heat exchange between the support body (12) and the water and prevent the formation of air bubbles.

9. The heater according to one or more of the preceding claims, configured to be arranged, in use, outside the aquarium.

10. A device for aquariums comprising:
- a heater (10) according to one or more of the preceding claims;
- a filter for aquariums and/or a pump and/or a skimmer.
